# EUROPÄISCHE PATENTSCHRIFT

(11) **EP 0 945 649 B1**
(45) Veröffentlichungstag und Bekanntmachung des Hinweises auf die Patenterteilung: **01.10.2003**
(21) Anmeldenummer: 99103448.9
(22) Anmeldetag: 23.02.1999
(51) Int. Cl.: F16G 13/06, B65H 29/04, B41F 21/08

(54) **Kettenförderer zum Transport von Bogen**
Chain conveyor for transporting sheets
Convoyeur à chaine pour le transport de feuilles

(30) Priorität: 24.03.1998 DE 29805277 U
(43) Veröffentlichungstag der Anmeldung: 29.09.1999
(73) Patentinhaber: Heidelberger Druckmaschinen Aktiengesellschaft, 69115 Heidelberg (DE)
(72) Erfinder: Gunschera, Frank, 69226 Nussloch (DE); Hirth, Roland, 67354 Römerberg (DE)

(56) Entgegenhaltungen:
- US-A- 3 878 735
- US-A- 4 718 543
- US-A- 4 729 471

## Beschreibung

Die Erfindung betrifft einen Kettenförderer zum Transport von Bogen in einer die Bogen verarbeitenden Druckmaschine,mit Kettenführungsschienen, die gemeinsam mit einer diese tragenden Halterung einen Innenraum bilden, der eine offene Längsseite aufweist, mit Förderketten, die aus mit Gelenkachsen schwenkbar miteinander verbundener Außenlaschen und Innenlaschen gebildet und mittels der Kettenführungsschienen geführt sind, und mit Greifersysteme zum Erfassen der die Bogen tragenden Förderketten, die an einer Seite derselben zur Abdeckung der offenen Längsseite Abdecklaschen tragen, sowie eine mit dem Kettenförderer ausgestattete Bogen verarbeitende Druckmaschine.

Ein Kettenförderer der genannten Art ist aus der Druckschrift DE-PS 22 46 061 bekannt. Die bei diesem vorgesehenen Abdecklaschen sollen den genannten Innenraum staub- und schmiermitteldicht abkapseln. Die dabei verwendete Förderkette ist mittels bezüglich Gelenkachsen schwenkbar miteinander verbundener Außenlaschen und Innenlaschen gebildet, wobei die Gelenkachsen von Kettenbolzen gebildet sind, welche teils in einer bei Rollenketten üblichen Standardausführung und teils in Sonderausführung vorliegen. Ein jeweiliger in Sonderausführung gefertigter Kettenbolzen ist an einer Seite der Förderkette verlängert. Der verlängerte Abschnitt des Kettenbolzens trägt eine Lagerbüchse und eine am freien Ende des verlängerten Abschnittes abgestützte Druckfeder, welche die Lagerbüchse in Richtung auf das dem verlängerten Abschnitt abgewandte Ende des Kettenbolzens drückt. Eine jeweilige Abdecklasche weist zwei unter einem mehrere Teilungen der Förderkette entsprechenden gegenseitigen Abstand befindliche Bohrungen auf. Eine jeweilige Lagerbüchse durchgreift eine dieser Bohrungen aufeinanderfolgender Abdecklaschen, legt sich mittels eines an der Lagerbüchse ausgebildeten Bundes unter der Wirkung der genannten Druckfeder an eine jeweilige Abdecklasche an und drückt diese gegen an den Kettenführungsschienen angebrachte Gleitschienen.

Entsprechend dem über mehrere Teilungen der Förderkette reichenden Abstand der Bohrungen einer jeweiligen Abdecklasche sind auch die verlängerten Kettenbolzen unter diesem Abstand angeordnet, während zwischen diesen der genannten Standardausführung entsprechende Kettenbolzen vorgesehen sind.

Der bekannte Kettenförderer benötigt somit eine in mehrfacher Hinsicht individualisierte Förderkette, und zwar nicht nur hinsichtlich der Befestigung der Greifersysteme sondern auch hinsichtlich der Anbringung der Abdecklaschen.

Der Erfindung liegt die Aufgabe zugrunde, den eingangs genannten Kettenförderer so auszugestalten, daß die Abdecklaschen ohne besondere Ausbildung der Förderkette an dieser anbringbar sind.

Diese Aufgabe wird dadurch gelöst, daß die Abdecklaschen Rastelemente aufweisen, mittels derer sie formschlüssig mit einer jeweiligen Außenlasche verbunden sind.

Eine derartige Ausgestaltung birgt als weiteren Vorteil, daß bei einstückiger Ausbildung einer jeweiligen Abdecklasche und den daran vorgesehenen Rastelementen, beispielsweise in Form eines Kunststoffspritzgußteiles, keine zusätzlichen Teile erforderlich sind, um die Verbindung der Abdecklaschen mit der Förderkette herzustellen.

Die Erfindung und bevorzugte Ausgestaltungen des Erfindungsgegenstandes sind nachfolgend anhand von Zeichnungen näher erläutert.

Hierin zeigt:
- Fig. 1: in stark vereinfachter Darstellung einen Kettenförderer zum Transport von Bogen am Beispiel eines Kettenauslegers einer die Bogen verarbeitenden Druckmaschine,
- Fig. 2: einen entlang der Linie II in Fig. 1 geführten Schnitt durch die Kettenführungsschienen, und eine diese tragende Halterung und die mit den Abdecklaschen entsprechend einem ersten Ausführungsbeispiel versehene Förderkette,
- Fig. 3: eine der Fig. 2 entsprechende Schnittdarstellung mit einer vom Beispiel gemäß Fig. 2 abweichend ausgebildeten Abdecklasche,
- Fig. 4: eine der Fig. 2 entsprechende Schnittdarstellung mit einem weiteren Ausführungsbeispiel der Abdecklasche,
- Fig. 5: einen Abschnitt einer mit den Abdecklaschen versehenen Förderkette in einer Draufsicht mit längs der Kettenbolzenachsen geschnittenen Abdecklaschen,
- Fig. 6: einen Schnitt entlang der Linie VI in Fig. 5.

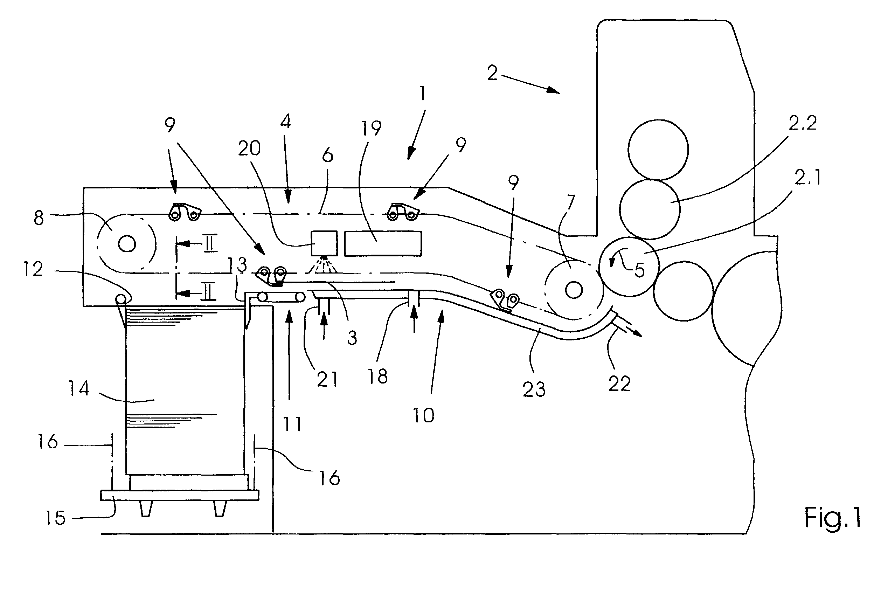

Der Kettenförderer ist grundsätzlich überall dort in einer Bogen verarbeitenden Druckmaschine einsetzbar, wo die Bogen nicht mittels Trommeln oder Zylindern transportiert werden. Er erweist sich jedoch insbesondere dort als vorteilhaft, wo die Atmosphäre in der Druckmaschine eine besonders hohe Konzentration an Schwebstoffen aufweist. Im folgenden ist daher beispielhaft ein Einsatz des Kettenförderers in einem Kettenausleger 1 einer Bogen verarbeitenden Druckmaschine zugrundegelegt. Der Kettenausleger 1 folgt auf eine letzte Verarbeitungsstation der Druckmaschine. Eine solche Verarbeitungsstation kann ein Druckwerk oder ein Nachbehandlungswerk sein, wie beispielsweise ein Lackwerk. Im vorliegenden Beispiel handelt es sich bei der letzten Verarbeitungsstation um ein im Offsetverfahren arbeitendes Druckwerk 2 mit einem Druckzylinder 2.1. Dieser führt einen jeweiligen Bogen 3 in einer mittels des Drehrichtungspfeiles 5 angedeuteten Verarbeitungsrichtung durch einen Druckspalt zwischen dem Druckzylinder 2.1 und einem damit zusammenarbeitenden Gummituchzylinder 2.2 und übergibt ihn anschließend an den Kettenförderer 4 unter Öffnen von am Druckzylinder 2.1 angeordneten, zum Erfassen des Bogens 3 an einem Greiferrand am vorauseilenden Ende des Bogens vorgesehenen Greifern. Der Kettenförderer 4 umfaßt zwei Förderketten 6, von welchen eine jeweilige entlang einer jeweiligen Seitenwand des Kettenauslegers 1 betriebsmäßig umläuft. Eine jeweilige Förderkette 6 umschlingt je eines von zwei synchron angetriebenen Antriebskettenrädern 7, deren Drehachsen miteinander fluchten, und ist im vorliegenden Beispiel über je ein gegenüber den Antriebskettenrädern 7 stromabwärts bezüglich der Verarbeitungsrichtung befindliches Umlenkkettenrad 8 geführt. Zwischen den beiden Förderketten erstrecken sich von diesen getragene Greifersysteme 9 mit Greifern, welche Lücken zwischen den am Druckzylinder 2.1 angeordneten Greifern durchfahren und dabei einen jeweiligen Bogen 3 unter Erfassen des genannten Greiferrandes am vorauseilenden Ende des Bogens 3 unmittelbar vor dem Öffnen der am Druckzylinder 2.1 angeordneten Greifer übernehmen, ihn über eine Bogenleitvorrichtung 10 hinweg zu einer Bogenbremse 11 transportieren und sich dort zur Übergabe des Bogens 3 an die Bogenbremse 11 öffnen. Diese vermittelt den Bogen 3 eine gegenüber der Verarbeitungsgeschwindigkeit verringerte Ablagegeschwindigkeit und gibt sie nach Erreichen derselben ihrerseits frei, so daß ein jeweiliger nunmehr verlangsamter Bogen 3 schließlich auf Vorderkantenanschläge 12 auftrifft und unter Ausrichtung an diesen und an diesen gegenüberliegenden Hinterkantenanschlägen 13 gemeinsam mit vorausgegangenen und/oder nachfolgenden Bogen 3 einen Stapel 14 bildet, der mittels eines Hubwerkes in dem Maße absenkbar ist, wie der Stapel 14 anwächst. Von dem Hubwerk sind in Fig. 1 lediglich eine den Stapel 14 tragende Plattform 15 und diese tragende, strichpunktiert angedeutete Hubketten 16 wiedergegeben.

Die Förderketten 6 sind entlang ihrer Wege zwischen den Antriebskettenrädern 7 einerseits und den Umlenkkettenrädern 8 andererseits mittels Kettenführungsschienen geführt, welche somit die Kettenbahnen der Kettentrume bestimmen. Im vorliegenden Beispiel werden die Bogen 3 von dem in Fig. 1 unteren Kettentrum transportiert. Dem von diesem durchlaufenen Abschnitt der Kettenbahn folgt eine diesem zugewandte, an der Bogenleitvorrichtung 10 ausgebildete Bogenleitfläche. Zwischen dieser und dem jeweils darüber hinweggeführten Bogen 3 ist bevorzugt betriebsmäßig ein Tragluftpolster ausgebildet. Hierzu ist die Bogenleitvorrichtung 10 mit in die Bogenleitfläche mündenden Blasluftdüsen ausgestattet, von welchen in Fig. 1 lediglich eine repräsentativ für deren Gesamtheit, und in symbolischer Darstellung in Form des Stutzens 18 wiedergegeben ist.

Um ein gegenseitiges Verkleben der bedruckten Bogen 3 im Stapel 14 zu verhindern, sind auf dem Weg der Bogen 3 von den Antriebskettenrädern 7 zur Bogenbremse 11 ein Trockner und eine Bestäubungsvorrichtung 20 vorgesehen.

Zur Vermeidung einer übermäßigen Erwärmung der Bogenleitfläche durch den Trockner 19 ist in die Bogenleitvorrichtung 10 ein Kühlmittelkreislauf integriert, der in Fig. 1 symbolisch durch einen Einlaßstutzen 21 und einen Auslaßstutzen 22 an einer der Bogenleitfläche zugeordneten Kühlmittelwanne angedeutet ist.

Auf eine Darstellung der genannten Kettenführungsschienen ist in Fig. 1 verzichtet. Der Verlauf derselben im vorliegenden Beispiel ist jedoch aus jenem der Kettentrume erkennbar.

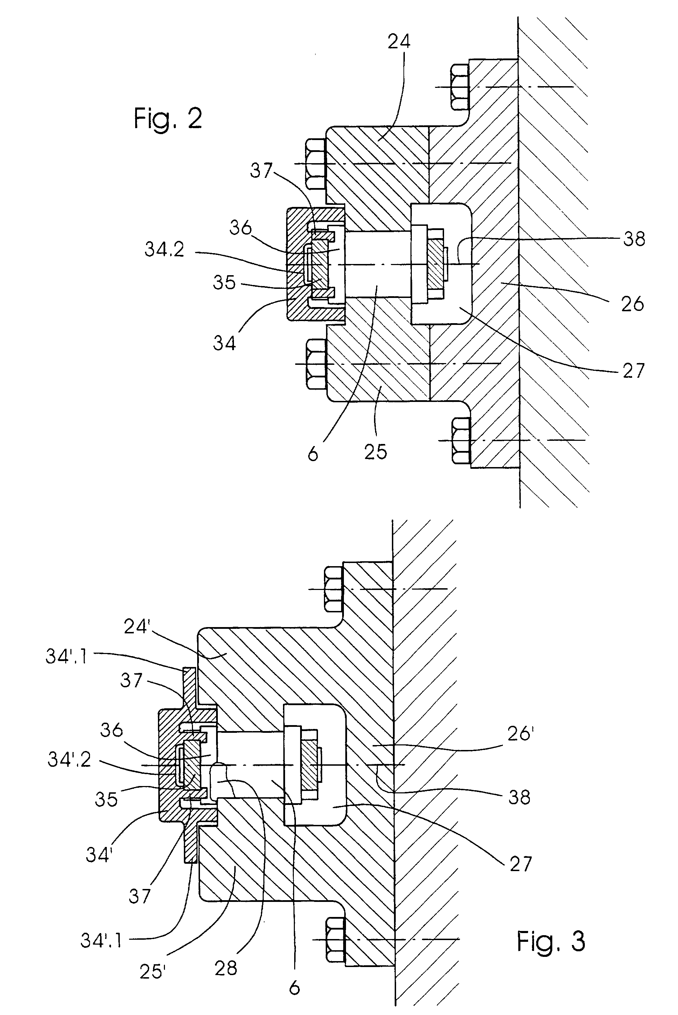

In Fig. 2 ist ein Ausführungsbeispiel mit einer inneren Kettenführungsschiene 24, einer äußeren Kettenführungsschiene 25 und einer diese tragenden Halterung 26 in einer Schnittdarstellung bei einem in Fig. 1 mit II angegebenen Schnittverlauf wiedergegeben. Die Kettenführungsschienen 24 und 25 bilden gemeinsam mit der Halterung 26 einen im Querschnitt in etwa C-förmigen Innenraum 27 mit einer offenen Längsseite. Die hierbei vorliegende körperliche Trennung von innerer und äußerer Kettenführungsschiene 24 und 25 und Halterung 26 ist nicht zwingend.

Wie in Fig. 3 beispielhaft dargestellt, kann zur Ausbildung von Kettenführungsschienen 24' und 25' und einer diese tragenden Halterung 26' auch ein einstückiges Bauteil vorgesehen sein.

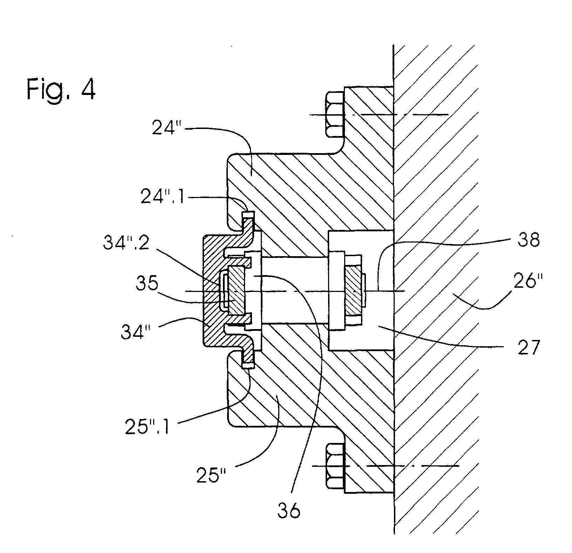

Entsprechend einem in Fig. 4 dargestellten Ausführungsbeispiel kann eine Halterung 26" für eine innere Kettenführungsschiene 24" und eine äußere Kettenführungsschiene 25" auch unmittelbar von einer Seitenwand des den Kettenförderer 4 umfassenden Abschnitts der Druckmaschine, im vorliegenden Beispiel des Kettenauslegers 1 gebildet sein.

Eine erste Ausführungsform einer Abdecklasche 34 ist in Fig. 2 in einem Schnitt entlang der Linie II in Fig. 1 in einem mit einer Förderkette 6 verbundenen Zustand erkennbar. Hiernach sind, wie auch aus den Fig. 3 bis 5 erkennbar, Abdecklaschen 34, 34', 34" einer Seite einer Förderkette 6 zugeordnet, welche mittels bezüglich Gelenkachsen schwenkbar miteinander verbundener Außenlaschen 35 und Innenlaschen 36 gebildet ist. Die Abdecklasche 34 weist im vorliegenden Beispiel einen im wesentlichen U-förmigen Querschnitt auf und ist innerhalb des U jeweils mit einem Paar Rastelementen 37 versehen, welche die Außenlasche 35 im Bereich des engsten Querschnittes derselben hintergreifen und so die Abdecklasche 34 formschlüssig mit der Außenlasche 35 verbinden.

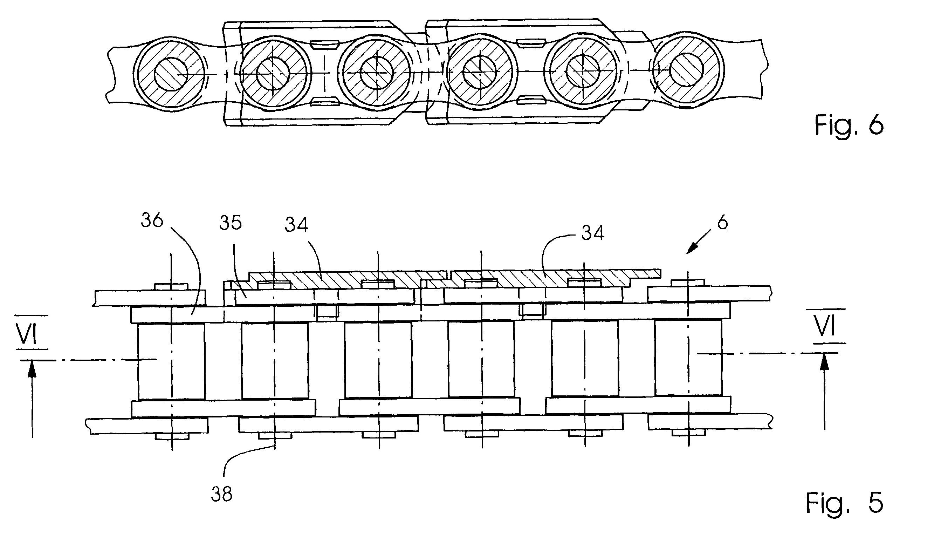

Eine jeweilige Abdecklasche 34 erstreckt sich entlang der jeweils zugeordneten Außenlasche 35 und überragt deren Enden mittels jeweils eines derart abgestuften Endbereiches, daß sich einander zugewandte Enden der Abdecklaschen 34 überlappen (siehe Fig. 5 und 6). Die Außenkonturen der abgestuften Endbereiche sind so ausgelegt, daß die sich gegenseitig überlappenden Enden eine gegenseitige Relativbewegung bei einer mit einem bestimmten Krümmungsradius erfolgenden Umlenkung der Förderkette 6 zulassen.

Die Innenseite der Basis des U der U-förmig ausgebildeten Abdecklasche 34 liegt im vorliegenden Beispiel an der zugeordneten Außenlasche 35 an und ein jeweiliger Schenkel des U reicht an eine den Abdecklaschen 34 zugewandte Seitenfläche der jeweiligen Kettenführungsschiene 24 bzw. 25 heran, so daß die Abdecklaschen 34 gemeinsam mit den von diesen umgriffenen Außenlaschen 35 und mit den Innenlaschen 36 einer Seite der Förderkette 6 die offene Längsseite 28 des Innenraumes 27 abdecken.

Eine gewisse Schutzwirkung gegen Eindringen von Staub in den Innenraum 27 und Austritt von Schmiermittel aus diesem wird bereits erzielt, wenn die Schenkel des U nur bis auf wenige zehntel Millimeter an die genannten Seitenflächen heranreichen und mit diesem Dichtungsspalte ausbilden.

Das in Fig. 3 wiedergegebene Ausführungsbeispiel verwendet eine Abdecklasche 34' mit einer Grundform, die der Abdecklasche 34 gemäß Fig. 2 entspricht; diese Grundform ist jedoch ergänzt um an den Schenkeln des U angebrachte Stege 34.1, welche gemeinsam mit Seitenflächen der Kettenführungsschienen 24' und 25' weitere Dichtungsspalte ausbilden.

Bei einem Verzicht auf die mittels der Schenkel des U gebildeten Dichtungsspalte kann bei entsprechender Dimensionierung der Kettenführungsschienen 24' und 25' bzw. bei Anbringung zusätzlicher seitlicher Dichtleisten an diesen der Querschnitt der Abdecklasche, abgesehen von den Stellen, an denen die Rastelemente 37 gegebenenfalls einstückig angeformt sind, eine einfache Rechteckform aufweisen, mittels welcher entsprechende Dichtungsspalte gebildet werden können, wie mit den Stegen 34.1 der Ausführungsform gemäß Fig. 3.

Mittels der in Fig. 4 dargestellten Ausführungsform einer Abdecklasche 34" lassen sich zwischen dieser und den Kettenführungsschienen 24" und 25" Labyrinthdichtungsspalte erzeugen. Hierzu sind die Abdecklaschen 34" gegenüber jenen im Beispiel nach Fig. 2 dahingehend abgewandelt, daß die freien Enden des U des im wesentlichen U-förmigen Querschnitts der Abdecklaschen 34" um 90° Grad nach außen abgewinkelt sind und in eine jeweilige Längsnut 24''.1 bzw. 25''.1 der inneren bzw. äußeren Kettenführungsschiene 24" bzw. 25"eingreifen.

In jedem Falle sind die Abdecklaschen 34 bzw. 34' bzw. 34'' an ihrer einer jeweiligen Außenlasche 35 zugewandten Seite bevorzugt mit zur jeweiligen Gelenkachse 38 konzentrischen Vertiefungen 34.2 bzw. 34'.2 bzw. 34''.2 versehen, welche die überstehenden Enden der Kettenbolzen formschlüssig umgreifen. Damit sind die Abdecklaschen 34, 34',34" mittels der Rastelemente 37 lagegesichert mit der Förderkette 6 verbindbar. Die damit insgesamt geschaffenen Befestigungsmittel ermöglichen einerseits eine sehr einfache Formgebung der Abdecklaschen 34, 34', 34" und andererseits eine einfache Montage derselben auf einer standardisierten Rollenkette.

### BEZUGSZEICHENLISTE

- 1: Kettenausleger
- 2: Druckwerk
- 2.1: Druckzylinder
- 2.2: Gummituchzylinder
- 3: Bogen
- 4: Kettenförderer
- 5: Drehrichtungspfeil
- 6: Förderkette
- 7: Antriebskettenrad
- 8: Umlenkkettenrad
- 9: Greifersystem
- 10: Bogenleitvorrichtung
- 11: Bogenbremse
- 12: Vorderkantenanschlag
- 13: Hinterkantenanschlag
- 14: Stapel
- 15: Plattform
- 16: Hubkette
- 18: Stutzen
- 19: Trockner
- 20: Bestäubungsvorrichtung
- 21: Einlaßstutzen
- 22: Auslaßstutzen
- 23: Kühlmittelwanne
- 24, 24', 24": innere Kettenführungsschiene
- 24".1: Längsnut in der inneren Kettenführungsschiene 24"
- 25, 25', 25": äußere Kettenführungsschiene
- 25".1: Längsnut in der äußeren Kettenführungsschiene 25"
- 26, 26', 26": Halterung
- 27: Innenraum
- 34, 34', 34": Abdecklasche
- 34'.1: Steg der Abdecklasche 34'
- 34.2; 34'.2; 34".2: Vertiefung in der Abdecklasche 34, 34', 34"
- 35: Außenlasche
- 36: Innenlasche
- 37: Rastelement
- 38: Gelenkachse

## Patentansprüche

1. Kettenförderer zum Transport von Bogen (3) in einer die Bogen (3) verarbeitenden Druckmaschine, mit
- Kettenführungsschienen (24, 25; 24', 25'; 24'', 25"), die gemeinsam mit einer diese tragenden Halterung (26; 26'; 26") einen Innenraum (27) bilden, der eine offene Längsseite (28) aufweist, und mit
- Greifersysteme (9) zum Erfassen der Bogen (3) tragenden Förderketten (6), die mittels der Kettenführungsschienen (24, 25; 24', 25';24", 25") geführt sind, mittels Gelenkachsen (38) schwenkbar miteinander verbundene Außenlaschen (35) und Innenlaschen (36) umfassen und jeweils an einer Kettenseite Abdecklaschen (34; 34'; 34") zur Abdeckung der offenen Längsseite (28) tragen,
**dadurch gekennzeichnet, dass**
die Abdecklaschen (34; 34'; 34") Rastelemente (37) aufweisen, mittels derer sie formschlüssig mit einer jeweiligen Außenlasche (35) verbunden sind.

2. Kettenförderer nach Anspruch 1,
**dadurch gekennzeichnet,**
**daß** die Rastelemente (37) eine jeweilige Außenlasche (35) im Bereich eines engsten Querschnittes der Außenlasche (35) hintergreifen.

3. Kettenförderer nach Anspruch 1,
**dadurch gekennzeichnet,**
**daß** eine jeweilige Abdecklasche (34, 34', 34'') an ihrer einer jeweiligen Außenlasche (35) zugewandten Seite zur jeweiligen Gelenkachse (38) konzentrische Vertiefungen (34.2, 34'.2, 34''.2) aufweist.

4. Bogen verarbeitende Druckmaschine mit einem Kettenförderer (4) zum Transport der Bogen,
**gekennzeichnet durch**
eine Ausbildung des Kettenförderers (4) nach wenigstens einem der Ansprüche 1 bis 3.

## Claims

1. A chain conveyor for transporting sheets (3) in a printing press that handles the sheets (3), having
- chain guide rails (24, 24', 24'', 25, 25', 25'') which, together with a mount (26, 26', 26'') carrying them, form an interior (27) having an open long side (28), and having
- conveying chains carrying gripper systems (9) for grasping the sheets (3), said conveyor chains being guided by means of the chain guide rails (24, 24', 24'', 25, 25', 25'') and comprising outer tabs (35) and inner tabs (36) pivotably joined together with respect to pivot axes (38) and having cover tabs (34, 34', 34'') intended for covering the open long side (28) on one chain side,
**characterized in**
**that** the cover tabs (34, 34', 34'') having detent elements (37), by means of which they are connected in form-locking fashion with a respective outer tab (35).

2. The chain conveyor of claim 1,
**characterized in that**
the detent elements (37) engage a given outer tab (35) from behind in the region of the narrowest cross section of the outer tab (35).

3. The chain conveyor of claim 1,
**characterized in that**
**characterized in that** a given cover tab (34, 34', 34''), on its side toward a given outer tab (36), has indentations (34.2, 34'.2, 34''.2) that are concentric to the respective pivot axis (38).

4. A sheet-fed printing press having a chain conveyor (4) for transporting the sheets,
**characterized in**
an embodiment of the chain conveyor (4) in accordance with at least one of claims 1-3.

## Revendications

1. Convoyeur à chaîne pour le transport de feuilles (3) dans une machine d'impression transformant les feuilles (3), avec
- des rails de guidage de chaîne (24, 25 ; 24', 25' ; 24'', 25''), qui forment conjointement avec une fixation (26 ; 26' ; 26'') les portant un espace intérieur (27) qui présente un côté longitudinal ouvert (28),
et avec
- des chaînes de convoyeur (6) qui comprennent des systèmes de pince (9) pour saisir les feuilles (3), lesdites chaînes de convoyeur étant guidées au moyen des rails de guidage de chaîne (24, 25 ; 24', 25' ; 24'', 25''), et comprenant des éclisses extérieures (35) et des éclisses intérieures (36) reliées les unes aux autres de manière orientable au moyen d'essieux articulés (38) et qui portent sur un côté des êclisses de recouvrement (34 ; 34' ; 34'') pour recouvrir le côté longitudinal ouvert (28),
**caractérisé en ce que**
les éclisses de recouvrement (34 ; 34' ; 34'') comprennent des éléments d'encoche (37), au moyen desquels elles sont reliées par complémentarité de forme à une éclisse extérieure (35) respective.

2. Convoyeur à chaîne selon la revendication 1,
**caractérisé en ce que**
les éléments d'encoche (37) saisissent une éclisse extérieure (35) respective dans la zone d'une section transversale la plus restreinte de l'éclisse extérieure (35).

3. Convoyeur à chaîne selon la revendication 1,
**caractérisé en ce que**
une éclisse de recouvrement respective (34 ; 34' ; 34'') présente sur son côté tourné vers une éclisse extérieure (35) respective des évidements (34.2, 34'.2, 34''.2) concentriques par rapport à l'essieu articulé (38) respectif.

4. Machine d'impression transformant les feuilles comprenant un convoyeur à chaîne (4) pour le transport de feuilles,
**caractérisée par**
une formation du convoyeur à chaîne (4) selon au moins l'une des revendications 1 à 3.
